# EUROPÄISCHE PATENTSCHRIFT

(11) **EP 3 208 583 B1**
(45) Veröffentlichungstag und Bekanntmachung des Hinweises auf die Patenterteilung: **08.05.2019**
(21) Anmeldenummer: 16156554.4
(22) Anmeldetag: 19.02.2016
(51) Int. Cl.: G01G 21/24, G01G 7/02, G01D 5/26, G01L 1/20

(54) **KRAFTÜBERTRAGUNGSVORRICHTUNG MIT SEPARATEM POSITIONSSENSORHEBELARM**
FORCE TRANSMISSION DEVICE WITH SEPARATE POSITION SENSOR LEVER ARM
DISPOSITIF DE TRANSMISSION DE FORCE COMPRENANT UN BRAS DE LEVIER DE CAPTEUR DE POSITION SEPARÉ

(43) Veröffentlichungstag der Anmeldung: 23.08.2017
(73) Patentinhaber: Mettler-Toledo GmbH, 8606 Greifensee (CH)
(72) Erfinder: Burkhard, Hans-Rudolf, 8492 Wila (CH)
(74) Vertreter: Mettler-Toledo

(56) Entgegenhaltungen:
- DE-A1- 19 621 375
- DE-C1- 4 137 919
- US-A- 4 938 301
- US-A- 4 964 478

## Beschreibung

Die vorliegende Erfindung bezieht sich auf eine Kraftübertragungsvorrichtung für eine Kraftmessvorrichtung basierend auf dem Prinzip der elektromagnetischen Kraftkompensation, sowie ein gravimetrisches Messinstrument mit einer Kraftmessvorrichtung und ein Verfahren zur Regelung des elektrischen Kompensationsstromes durch eine Spule einer auf dem Prinzip der elektromagnetischen Kraftkompensation basierenden Kraftmessvorrichtung.

Das Prinzip der elektromagnetischen Kraftkompensation hat ein weites Anwendungsgebiet in den verschiedenartigsten Waagen, die im Handel, in der Industrie und in Laboratorien eingesetzt werden. Eine besondere Stärke dieses Prinzips liegt darin, dass sich damit Waagen von enormer Messgenauigkeit realisieren lassen. Mit einer nach dem elektromagnetischen Kraftkompensationsprinzip funktionierenden Analysenwaage kann z.B. eine Wägelast von 100 g mit einer Messauflösung von 0,01 mg bestimmt werden, d.h. auf ein Zehnmillionstel genau.

Eine gravimetrische Kraftmessvorrichtung der vorliegenden Erfindung hat gattungsgemäss ein feststehendes Basisteil, einen am Basisteil beweglich gelenkten Lastaufnehmer zur Aufnahme der Gewichtskraft einer zu wägenden Last, ein am Basisteil festgelegtes Permanentmagnetsystem mit einem Luftspalt, eine im Luftspalt bewegliche und von einem Kompensationsstrom durchflossene Spule, sowie einen den Lastaufnehmer mit der Spule verbindenden Kraftübertragungsmechanismus. Ein optoelektronischer Lagesensor, dessen Sensorsignal der durch das Auflegen der Last auf den Lastaufnehmer verursachten Auslenkung der miteinander verbundenen beweglichen Teile der Waage aus einer Null-Lage entspricht, umfasst typischerweise einen Lichtsender und einen Lichtempfänger, welche mit einem Zwischenraum auf dem Basisteil festgelegt sind, sowie den Zwischenraum durchsetzende und die Auslenkung der beweglichen Teile mitmachende Blendenfahne.

Das Signal des Lagesensors wird einem Regler zugeführt, welcher daraufhin den Kompensationsstrom so regelt, dass die Blendenfahne und die mit ihr verbundenen beweglichen Teile der Waage durch die elektromagnetische Kraft zwischen Spule und Permanentmagnet in die Null-Lage zurückgeführt werden. Mit andern Worten, die Regelung sorgt dafür, dass die elektromagnetische Kompensationskraft der Wägelast das Gleichgewicht hält. Da nach den Gesetzen des Elektromagnetismus die Stärke des Spulenstromes und die erzeugte Kraft zueinander proportional sind, kann das Gewicht einer auf den Lastempfänger gebrachten Wägelast durch Messung des Spulenstroms bestimmt werden.

In der DE 3 743 073 A1 ist eine Waage nach dem vorangehend beschriebenen Prinzip der elektromagnetischen Kraftkompensation gezeigt. Die Waage besteht aus einem gehäusefesten Systemträger, an dem über zwei Lenker mit Gelenkstellen ein Lastaufnehmer in senkrechter Richtung beweglich befestigt ist. Der Lastaufnehmer trägt in seinem oberen Teil die Lastschale zur Aufnahme des Wägegutes und überträgt die der Masse des Wägegutes entsprechende Kraft über ein Koppelelement auf den kürzeren Hebelarm des Übersetzungshebels. Der Übersetzungshebel ist durch zwei Federgelenke am Systemträger gelagert. Am längeren Hebelarm des Übersetzungshebels ist eine Spule befestigt. Die Spule befindet sich im Luftspalt eines Permanentmagnetsystems und erzeugt die belastungsabhängige Gegenkraft. Die Grösse des Stromes durch die Spule wird dabei in bekannter Weise durch den optischen Lagensensor und einen Regelverstärker so geregelt, dass Gleichgewicht zwischen dem Gewicht des Wägegutes und der elektromagnetisch erzeugten Gegenkraft herrscht. Der optische Lagensensor besteht aus dem Strahlungssender, dem Strahlungsempfänger und der Schlitzblende. Der Strahlungssender und der Strahlungsempfänger sind am Deckel des Permanentmagnetsystems befestigt, wobei die Schlitzblende am Übersetzungshebel befestigt ist. Durch diese Anordnung bilden das hintere Ende des Übersetzungshebels, die Spule und die Schlitzblende gemäss der Beschreibung der DE 3 743 073 A1 eine kompakte, geometrisch sehr stabile Einheit.

Ein Wägesystem für eine oberschalige Waage ist in DE 103 26 699 B3 gezeigt. Das Wägesystem weist einen in zwei Teilhebel geteilten Übersetzungshebel auf. Auch das Koppelelement und das Federgelenk (hier Biegegelenk genannt) für den Übersetzungshebel sind in zwei Teile aufgeteilt und jeweils seitlich neben dem Lastaufnehmer angeordnet. Die beiden Teilhebel sind an deren Ende bzw. am längeren Hebelarm durch eine Quertraverse verbunden, welche einen Spulenhalter zur Befestigung der Spule und eine Schlitzblende trägt. Dadurch entsteht ein kompaktes Wägesystem.

Ein optischer Lagesensor wird in der EP 2 607 866 A1 beschrieben. Die Hauptanforderung an den Lagesensor, oder auch Positionssensor genannt, einer elektromagnetischen Kompensationswaage besteht darin, dass die Null-Lage, d.h. die auf das feststehende Basisteil bezogene Position der Blendenfahne bei welcher der Nulldurchgang des Sensorsignals zwischen negativen und positiven Werten stattfindet, mit höchster Genauigkeit und Reproduzierbarkeit eingehalten werden muss. Ausserdem sollte das Sensorsignal in einem möglichst linearen und reproduzierbaren Verhältnis zur Auslenkung der Blendenfahne stehen. Diese Forderungen müssen insbesondere innerhalb eines gegebenen Bereichs der Raumtemperatur und Luftfeuchtigkeit erfüllt werden.

Innerhalb des vorstehend umrissenen Gebietes konzentriert sich die vorliegende Erfindung auf die Ausgestaltung des Kraftübertragungsmechanismus und die Anbringung des optoelektronischen Lagesensors sowie des Messaufnehmers (z.B. eine Spule) an diesem.

Die Entwicklung von immer stärkeren Messaufnehmern und der Einsatz in Kraftübertragungsvorrichtungen bedingt, dass die Kraftübertragungsvorrichtungen den erhöhten Kräften angepasst werden, denn dadurch erhöhen sich ebenfalls die Biegekräfte am Kraftübertragungshebel. Tut man dies nicht, können die am Kraftübertragungshebel ansetzenden Kräfte - auf der einen Seite die Gewichtskraft der zu wägenden Last und auf der anderen Seite die Kompensationskraft des Messaufnehmers - diesen durchbiegen. Bedingt durch die Anelastizität des Materials des Kraftübertragungshebels kann sich der Lastaufnehmer mit der Zeit zunehmend nach unten (d.h. in Richtung der Schwerkraft) verschieben, wodurch eine Lastdrift entsteht. Weiter bewirkt diese Verschiebung des Lastaufnehmers nach unten, dass sich die Rückstellkräfte der Biegelager, beziehungsweise aller Dünnstellen - welche als Feder mit einer Federkonstante angesehen werden können, und durch die Verschiebung mehr Federweg zurück legen - erhöhen und so ebenfalls auf längere Zeit einen unbekannten Einfluss auf das Messresultat haben, da die in der Prozesseinheit abgelegten Berechnungskonstanten, welche für den Arbeitspunkt erstellt wurden, nicht mehr aktuell sind. Ein Teil von diesen Einflüssen können durch geeignete Softwaremittel kompensiert werden. Jedoch stützt sich diese Kompensation auf Model- und Erfahrungswerte und reicht nicht aus für hochauflösende Kraftmessvorrichtungen.

In bekannten gängigen Bauarten von Kraftmessvorrichtungen wie zum Beispiel in der WO 2014 169 981 A1, der US 4,938,301, der US 5,315, 073, der US 4,245,711, der US 4,964,478 A, der DE 196 21 375 A1, der DE 41 37 919 C1 oder in der obengenannten DE 3 743 073 A1 erfolgt die Positionsbestimmung mittels der am Kraftübertragungshebel befestigten Blendenfahne wo zugleich auch die Spule befestigt ist. Dies bringt den Vorteil einer einfachen Konstruktion indem derselbe Hebel genutzt wird. Jedoch wird durch die oben erwähnte mögliche Durchbiegung des Kraftübertragungshebels auch die Positionserfassung beeinträchtigt.

Eine Möglichkeit der Durchbiegung entgegen zu wirken ist die Kraftübertragungsvorrichtung konstruktiv so zu verbessern, dass der Kraftübertragungshebel den erhöhten Kräften standhält. Einerseits sollte aber der Hebel möglichst leicht ausfallen wegen der Massenträgheit um das Wägesystem beim Einschwingen in die Null-Lage nicht zu verlangsamen, andererseits sollte er sich, wie oben erwähnt aufgrund der Anelastizität, möglichst wenig durchbiegen. Auch möchte man der geringen Anschaffungs- und Herstellkosten wegen Aluminiumdruckguss verwenden, der sich aber hinsichtlich der Anelastizität sehr schlecht verhält.

Am meist längeren Kraftübertragungshebelarm wird an dessen Ende die Spule befestigt. Der entsprechende Permanentmagnet wird in der Mitte eines sogenannten Topfs, oder auch Mantel genannt, angeordnet, welcher die Aufgabe hat das Magnetfeld zu führen und zu leiten, sowie die Streuung und somit die Störung der naheliegenden Wägeelektronik zu verhindern, bzw. diese vom Magnetfeld abzuschirmen. Umgekehrt mindert diese Abschirmung vielmehr auch eine ungewollte Einwirkung von aussen auf das Magnetfeld des Permanentmagneten. Öffnungen am Topf sind notwendig um den Kraftübertragungshebel in den Topf zu führen, so dass die Spule im Magnetfeld richtig zu liegen kommt. Nun sollten diese Öffnungen im Topf möglichst klein gehalten werden da sonst das Magnetfeld aus dem Topf austreten kann oder die Kraftmessvorrichtung durch parasitäre Fremdfelder negativ beeinflusst wird. Jede Inhomogenität des Permanentmagnet-Spulen-Systems wirkt der angestrebten Linearität der Kraftmessvorrichtung entgegen. Die vertauschte Anordnung von Spule und Permanentmagneten am Kraftübertragungshebel bzw. am feststehenden Parallelschenkel bringt dieselben, oben erwähnten Probleme mit sich.

Die vorliegende Erfindung hat deshalb zur Aufgabe, eine Kraftübertragungsvorrichtung zu schaffen, die ein Einbau von stärkeren Messumformern erlaubt, und die die Nachteile des Standes der Technik überwindet. Zudem soll der Einfluss von von aussen wirkenden Fremdfeldern auf die Kraftmessvorrichtung minimiert werden.

Die Aufgabe wird erfindungsgemäss mit einer Kraftübertragungsvorrichtung für eine Kraftmessvorrichtung basierend auf dem Prinzip der elektromagnetischen Kraftkompensation gemäss Anspruch 1 gelöst. Die Kraftübertragungsvorrichtung weist eine Parallelführung mit einem beweglichen Parallelschenkel, einem feststehenden Parallelschenkel, und mindestens zwei Parallellenker auf, wobei die Parallelschenkel und die Parallellenker durch Biegelager miteinander verbunden sind und der bewegliche Parallelschenkel durch die Parallellenker am feststehenden Parallelschenkel geführt ist. Ferner weist die Kraftübertragungsvorrichtung einen um ein am feststehenden Parallelschenkel angeordnetes Drehlager schwenkbar gelagerten Kraftübertragungshebel auf. Der Kraftübertragungshebel weist einen über ein Koppelglied mit dem beweglichen Parallelschenkel in kraftübertragenderweise verbundenen ersten Hebelarm, und einen mit einem Messaufnehmer in kraftübertragenderweise verbindbaren zweiten Hebelarm auf. Die Kraftübertragungsvorrichtung zeichnet sich dadurch aus, dass der zweite Hebelarm einen ersten Teilhebelarm und einen zweiten Teilhebelarm aufweist, wobei der erste Teilhebelarm dafür ausgelegt ist, die vom Messaufnehmer erzeugte Kompensationskraft aufzunehmen, und der zweiten Teilhebelarm dafür ausgelegt ist, eine Auslenkung des schwenkbar gelagerten Kraftübertragungshebels von einen Positionssensor zu erfassen.

Erfindungsgemäss sind der erste Teilhebelarm und der zweite Teilhebelarm über deren Länge bis nahe dem Drehlager des schwenkbar gelagerten Kraftübertragungshebel derart voneinander getrennt, so dass eine vom Messaufnehmer erzeugte Kompensationskraft im Wesentlichen über den ersten Teilhebelarm an den beweglichen Parallelschenkel übertragen wird. Der Vorteil dieser Weiterbildung liegt darin, dass eine einfachere Umsetzung in der Fertigung solcher Kraftübertragungsvorrichtungen besteht. Zudem kann eine Schwächung des entsprechenden Parallellenkers vermieden werden.

Somit führt der Kraftpfad über welchen sich die Gewichtskraft und die Kompensationskraft entgegenwirken nicht über denselben Hebel wo auch die Blendenfahne angebracht ist. Eine mögliche Durchbiegung des Krafthebels hat dadurch einen verminderten Einfluss auf die Positionsbestimmung. Zudem lässt sich bei der Dimensionierung geeigneter Kraftübertragungsvorrichtungen besser Rücksicht auf die Ausgestaltung des Spulenhalters und dessen Durchführung durch den Mantel in das Permanentmagnetsystem nehmen. Mit dem Einsatz von stärkeren Messaufnehmern kann der Lastbereich einer Kraftmessvorrichtung erhöht werden ohne dabei die Anzahl der Übersetzungshebel oder deren Armlängen zu ändern. Die durch die stärkeren Messaufnehmer entstehende erhöhte Lastdrift ist schwieriger durch Softwarealgorithmen zu kompensieren, da höhere Amplituden in der Lastdrift auftreten. Durch die erfinderische Kraftübertragungsvorrichtung werden die Amplituden verkleinert, was zu einer einfacheren Kompensation durch einen Softwarealgorithmus führt.

Als Kraftübertragungshebel, wie er hier verstanden sein soll, kann jeder Übertragungshebel der Kraftübertragungsvorrichtung auf dem Kraftpfad vom beweglichen Parallelschenkel hin zum Messaufnehmer sein. Es ist dabei belanglos ob es sich bei der Kraftübertragungsvorrichtung um ein Ein-, Zwei- oder Dreihebelsystem handelt. Vorzugsweise ist der Kraftübertragungshebel jener Hebel eines Kraftübertragungsmechanismus, welcher auf dem Kraftpfad einem Messaufnehmer am nächsten liegt, d.h. ohne dazwischenliegende Übertragungshebel direkt mit dem Messaufnehmer verbunden ist. In besonderen Ausführungen kann das Drehlager des Kraftübertragungshebels auch an einem vorgeschalteten Hebel angebracht sein, d.h. dass der Kraftübertragungshebel eine zum feststehenden Parallelschenkel bewegliche Schwenkachse aufweist. Eine solche Kraftübertragungsvorrichtung ist zum Beispiel aus EP 1 083 420 B1 bekannt.

In einer weiteren Weiterbildung der Erfindung sind der mindestens eine erste Teilhebelarm und der mindestens eine zweite Teilhebelarm über deren Länge und über das Drehlager des schwenkbar gelagerten Kraftübertragungshebels hinaus voneinander getrennt. Hieraus ergibt sich vorteilhafterweise eine Kraftübertragungsvorrichtung, welche einen Kraftpfad aufweist, über welchen sich die Gewichtskraft und die Kompensationskraft entgegenwirken, der möglichst lange vom Hebelarm des Positionssensors getrennt ist.

In einer vorteilhaften Weiterbildung weist der zweite Hebelarm einen geteilten ersten Teilhebelarm auf, der derart ausgelegt ist, dass die erzeugte Kompensationskraft im Wesentlichen gleichmässig verteilt über den geteilten ersten Teilhebelarm an den beweglichen Parallelschenkel übertragen wird. Weiter kann der zweite Teilhebelarm zwischen dem geteilten ersten Teilhebelarm angeordnet sein. Dadurch entsteht eine stabile und verwindungssteife Kraftübertragungsvorrichtung, welche sich zudem einfach Fertigen lässt.

In einer ersten Ausführungsform der Erfindung sind der erste Teilhebelarm und der zweite Teilhebelarm derart voneinander getrennt, dass die beiden Teilhebelarme in jeweils einer eigenen Ebene, welche parallel zu den Parallellenkern verläuft, übereinander angeordnet sind. In einer zweiten Ausführungsform der Erfindung sind der erste Teilhebelarm und der zweite Teilhebelarm derart voneinander getrennt, dass die beiden Teilhebelarme in derselben Ebene, welche parallel zu den Parallellenkern verläuft, nebeneinander angeordnet sind. Zudem kann in der ersten oder der zweiten Ausführungsform der zweite Teilhebel in einem Winkel w zum ersten Teilhebel um das Drehlager gedreht angeordnet sein.

In einer weiteren Weiterbildung ist am vom Drehlager des schwenkbar gelagerten Kraftübertragungshebels entfernten Ende des zweiten Teilhebelarms eine Blendenfahne angeordnet. Die Blendenfahne weist eine Blendenöffnung, insbesondere einen Blendenschlitz oder ein Langloch, mit einer kürzesten Weite auf. Vorteilhafterweise ist die Verbindungslinie zwischen dem Drehlager des Kraftübertragungshebels und dem Mittelpunkt der kürzesten Weite im Wesentlichen senkrecht zur kürzesten Weite. Anders ausgedrückt ist die kürzeste Weite der Blendenöffnung immer gleichgerichtet wie die Tangente eines Kreises, der das Drehlager als Mittelpunkt hat.

In einer vorteilhaften Ausgestaltung sind der feststehende Parallelschenkel, der bewegliche Parallelschenkel und der Kraftübertragungshebel zusammen aus einem monolithischen, homogenen Materialblock gearbeitet in welchem Biegelager in der Form von dünnen Materialbrücken ausgebildet sind. Vorzugsweise sind der erste Teilhebelarm und/oder der zweite Teilhebelarm derart ausgestaltet, dass mindestens einer der beiden Teilhebelarme ausserhalb des monolithischen, homogenen Materialblock verlängerbar ist.

Die erfindungsgemässe Kraftübertragungsvorrichtung kann in einer Kraftmessvorrichtung basierend auf dem Prinzip der elektromagnetischen Kraftkompensation eingebaut werden, wobei an der Kraftübertragungsvorrichtung ein am beweglichen Parallelschenkel angeordneten Messaufnehmer zur Aufnahme der Gewichtskraft einer zu wägenden Last angeordnet ist. Dieser Messaufnehmer weist einem am feststehenden Parallelschenkel oder am ersten Hebelarm angeordnetes Permanentmagnetsystem mit einem Luftspalt auf und eine entsprechend dem Permanentmagnetsystem am ersten Hebelarm oder am feststehenden Parallelschenkel angebrachte und im Luftspalt des Permanentmagnetsystem bewegliche Spule, welche im Messbetrieb von einem Kompensationsstrom durchflossenen wird. Weiter an der Kraftübertragungsvorrichtung angeordnet ist dabei ein optoelektronischer Positionssensor, aufweisend eine Lichtquelle und einen Lichtempfänger, wobei die Lichtquelle und der Lichtempfänger auf dem feststehenden Parallelschenkel mit Zwischenraum angeordnet sind, sowie eine die Bewegung der Spule mitmachende Blendenfahne welche in der Art einer Lichtschranke den freien Bereich zwischen dem Lichtsender und Lichtempfänger durchsetzt. Die Kraftmessvorrichtung kann in einem gravimetrischen Messinstrument eingesetzt werden.

Im Folgenden wird der Erfindungsgegenstand anhand von bevorzugten Ausführungsbeispielen, welche in den beiliegenden Zeichnungen dargestellt sind erläutert. Es zeigen:
- Fig. 1: eine schematische Schnittdarstellung einer Kraftmessvorrichtung nach dem Stand der Technik;
- Fig. 2: eine schematische Schnittdarstellung einer ersten Ausführungsform;
- Fig. 3A: eine schematische Schnittdarstellung eines Messaufnehmers mit zweifachem Permanentmagneten und axialem Durchgang des Spulenhalters;
- Fig. 3B: eine schematische Schnittdarstellung eines Messaufnehmers mit zweifachem Permanentmagneten und radialem Durchgang des Spulenhalters;
- Fig. 4: eine vereinfachte schematische Darstellung der ersten Ausführungsform;
- Fig. 5: eine vereinfachte schematische Schnittdarstellung der ersten bzw. einer zweiten Ausführungsform;
- Fig. 6: eine schematische Schnittdarstellung der zweiten Ausführungsform;
- Fig. 7: eine schematische Schnittdarstellung der zweiten Ausführungsform mit ausserhalb des eigentlichen Grundkörpers der Kraftübertragungsvorrichtung geführtem zweiten Teilhebelarm;
- Fig. 8: eine monolithisch aufgebaute Kraftübertragungsvorrichtung der zweiten Ausführungsform in isometrischer Darstellung;
- Fig. 9: eine monolithisch aufgebaute Kraftübertragungsvorrichtung der ersten Ausführungsform in Seitenansicht;
- Fig. 10: eine schematische Schnittdarstellung einer dritten Ausführungsform mit mittig angeordnetem zweiten Teilhebelarm und geteiltem ersten Teilhebelarm; und
- Fig. 11: eine monolithisch aufgebaute Kraftübertragungsvorrichtung der dritten Ausführungsform in isometrischer Darstellung.

Merkmale mit gleicher Funktion und ähnlicher Ausgestaltung sind in der folgenden Beschreibung mit denselben Bezugszeichen versehen.

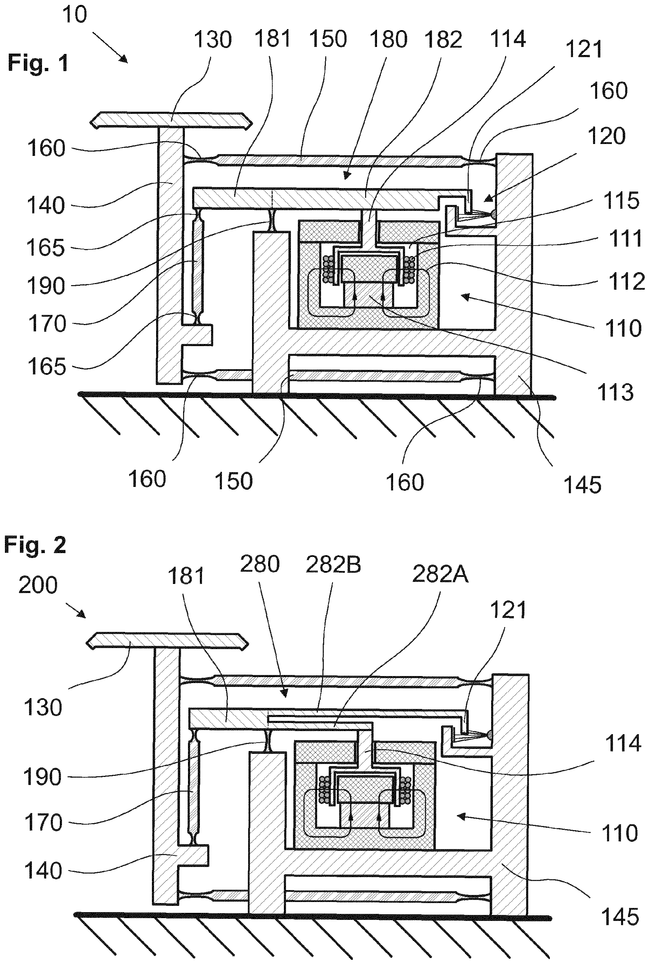

Figur 1 zeigt eine stark vereinfachte schematische Darstellung einer Kraftübertragungsvorrichtung 10 mit einem Messaufnehmer 110, auch elektrodynamischer Wandler genannt, und einem Positionssensor 120 nach dem Stand der Technik. Der Aufbau und die Funktion werden am Beispiel einer oberschaligen Waage nach dem Prinzip der elektromagnetischen Kraftkompensation beschrieben. Dies schliesst jedoch andere Bauarten von Waagen nicht aus, solange sie gemäss dem Prinzip der elektromagnetischen Kraftkompensation betrieben werden.

Die Gewichtskraft des Wägegutes (nicht gezeigt) auf der Waagschale 130 überträgt sich auf das Gehänge, oder auch beweglicher Parallelschenkel 140 genannt. Dieser wird von Parallellenkern 150 geführt, welche über elastische Biegegelenke 160 verbunden sind. Die Koppel 170, ebenfalls mit elastischen Biegeelementen 165 ausgeführt, überträgt die Gewichtskraft auf den Lastarm 181 des Hebels 180, der im Drehpunkt durch mindestens ein Biegegelenk 190 gestützt wird. Am anderen Ende des Hebels 180, dem Kraftarm 182, sitzt die Kompensationsspule 111 des elektrodynamischen Wandlers 110, die sich im magnetischen Fluss 112 des Magnetsystems befindet, welches von einem Permanentmagneten 113 erzeugt wird.

Wird ein Wägegut auf die Waagschale 130 gelegt, dreht sich der Hebel 180 wegen der auf ihn wirkenden Gewichtskraft im Gegenuhrzeigersinn um das Biegegelenk 190. Die von einem optoelektronischen Positionssensor 120 erfasste Auslenkung der am Hebel 180 befestigten Positionsfahne 121 wird an einen elektronischen Regler (nicht gezeigt) weitergeleitet, welcher den durch die Kompensationsspule 111 fliessenden Kompensationsstrom solange erhöht, bis sich der Hebel 180 wieder in die ursprüngliche Gleichgewichtslage zurückbewegt hat. Da die Gewichtskraft zur Kompensationskraft aufgrund der Übersetzung des Hebels 180 proportional ist, und diese ihrerseits proportional zum Kompensationsstrom, ist der Kompensationsstrom auch proportional zur Gewichtskraft, und damit zur aufgelegten Last.

Ein nicht gezeigter Analog-Digital-Wandler formt den analogen Kompensationsstrom in eine digitale Grösse um, womit der Signalverarbeitung ein digitales Äquivalent der Messgrösse zur Verfügung steht. Da der magnetische Fluss von der Temperatur abhängt, wird diese durch einen Temperaturfühler gemessen, dessen Signal ebenfalls der Signalverarbeitung verfügbar gemacht wird. Diese kompensiert nun die durch eine Temperaturänderung hervorgerufene Drift des Messsignals. Ferner wird das Messsignal u.a. noch linearisiert, in eine Masseneinheit umgerechnet und schliesslich auf einem Display (nicht gezeigt) angezeigt oder über eine Schnittstelle (nicht gezeigt) an ein externes Anzeigegerät übermittelt.

Vorzugsweise umfasst der Messaufnehmer 110 ein Permanentmagnetsystem 113 mit einem Luftspalt 115, und eine im Luftspalt 115 des Permanentmagnetsystems 113 an einem Spulenhalter 114 angebrachten und mit diesem beweglich angeordneten Spule 111. Es sind aber auch andere Messaufnehmer verwendbar, welche eine Kompensationskraft erzeugen. Ebenfalls ist der Positionssensor 120 vorzugsweise ein optoelektronischer Positionssensor, jedoch sind auch hier andere Positionssensoren möglich, welche eine Auslenkung der miteinander verbundenen beweglichen Teile der Waage aus einer Null-Lage erfasst. Ein optoelektronischer Positionssensor weist eine Lichtquelle und einen Lichtempfänger auf, wobei die Lichtquelle und der Lichtempfänger auf dem feststehenden Parallelschenkel 145 mit Zwischenraum angeordnet sind, sowie eine die Bewegung der Spule 111 mitmachende Blendenfahne 121 welche in der Art einer Lichtschranke den freien Bereich zwischen dem Lichtsender und Lichtempfänger durchsetzt.

In Figur 1 wird die durch den Messaufnehmer 110 erzeugte Kompensationskraft über den Kraftarm 182, den Lastarm 181, die Koppel 170 auf den beweglichen Parallelschenkel 140 übertragen um der Gewichtskraft eines auf die Waagschale 130 aufgelegten Wägeguts entgegenzuwirken. Dieser Kraftfluss hat mechanische Auswirkungen auf die beanspruchten Komponenten. So zum Beispiel auf den Kraftübertragungshebel 180, welcher sich unter Last biegt, und so die Form eines Bogens einnimmt, wobei die Punkte der Lasteinleitung und Krafteinleitung in den Kraftübertragungshebel 180 und der Punkt der Abstützstelle 190 nicht mehr auf einer Linie zu liegen kommen. Für die ebenfalls am Kraftübertragungshebel 180 angebrachte Blendenfahne 121 bedeutet dies eine Abweichung zum Idealfall des geraden, nicht gebogenen Kraftübertragungshebels 180 und somit eine Verfälschung des Wägemesswertes.

Diesem Nachteil kann damit begegnet werden, dass der Kraftübertragungshebel 180 dementsprechend robust ausgelegt wird. Dies führt jedoch dazu, dass die bewegte Masse, d.h. Kraftübertragungshebel 180, Spulenhalter 114 und Spule 111, grösser wird, was zu einer erhöhten Trägheit und schlussendlich einer längeren Dauer bis der Wägemesswert bestimmt ist bzw. angezeigt werden kann. Bis anhin beschränkte sich die Entwicklung demnach darauf das Verhältnis zwischen Robustheit und Gewicht des Kraftübertragungshebels 180 zu optimieren.

In Figur 2 ist die Kraftmessvorrichtung 10, wie sie in Figur 1 gezeigt ist, Kraftmessvorrichtung 200 modifiziert abgebildet. Bis auf den Kraftübertragungshebel 280 sind alle oben erwähnten Komponenten identisch vorhanden. Der Lastarm 181 des Kraftübertragungshebels 280 ist ebenfalls gleich ausgestaltet wie in Figur 1 und verläuft vom Biegegelenk 164 der Koppel 170 hin bis zur Abstützstelle beim Biegelager 190. Der andere Hebelarm, der Kraftarm 282 ist unterteilt in einen ersten Teilhebelarm 282A und einen zweiten Teilhebelarm 282B. Der in Figur 2 oben gezeigte zweite Teilhebelarm 282B ist mit der Positionsfahne 121 verbunden. Am unterhalb angeordneten Teilhebelarm 282A ist der Spulenhalter 114 befestigt. Die Trennung erfolgt über die gesamte Länge des Kraftarms 282 bis hin zur Abstützstelle beim Biegelager 190, kann aber je nach Auslegung der Kraftmessvorrichtung auch über das Biegelager 190 hinaus gehen oder vor dem Biegelager 190 enden.

Der Kraftpfad, über welchen sich die Gewichtskraft und die Kompensationskraft entgegenwirken, ist nicht mehr über denselben Hebel geführt, wo auch die Blendenfahne angebracht ist. Eine mögliche Durchbiegung des Krafthebels hat dadurch einen verminderten Einfluss auf die Positionsbestimmung. Zudem lässt sich bei der Auslegung geeigneter Kraftübertragungsvorrichtungen besser Rücksicht auf die Dimensionierung des Spulenhalters und dessen Durchführung durch den Mantel des Messaufnehmers in das Permanentmagnetsystem nehmen.

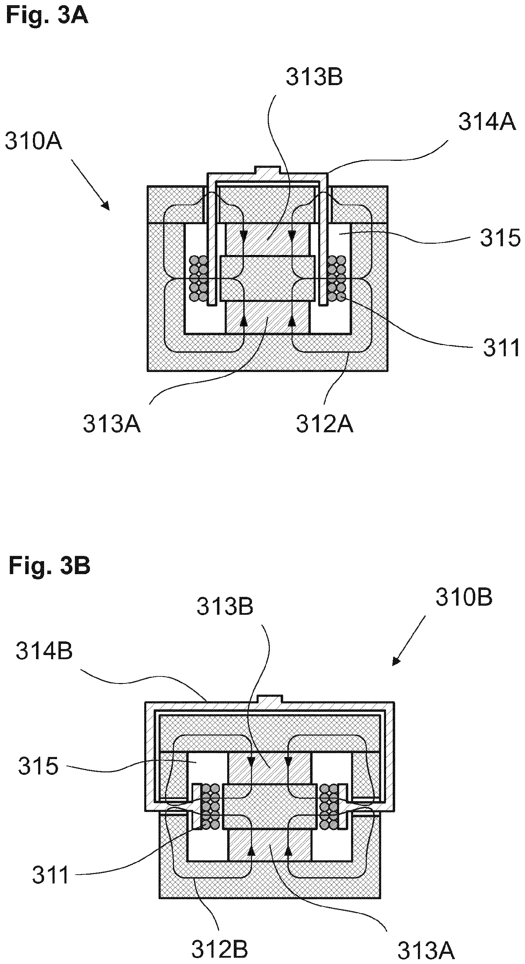

Ein weiterer Aspekt bei der Gestaltung des Kraftübertragungshebels 180 ist die Anbindung des Spulenhalters 114 und dessen Durchgang durch den Mantel ins Innere des Messaufnehmers. In den Figuren 1 und 2 sind Messaufnehmer 110 mit einem Permanentmagneten 113 gezeigt. Eine Weiterentwicklung hiervon sind Messaufnehmer 310A, 310B mit jeweils zwei Permanentmagneten 313A, 313B und einem dazwischenliegenden Polschuh wie sie in den Figuren 3A und 3B gezeigt sind. Diese besitzen meist einen geometrisch präziseren Magnetfluss 312A, 312B, d.h. die Feldlinien sind im Bereich der Spule 311 dichter und besser ausgerichtet, d.h. senkrecht zur Spulenachse bzw. der Wicklungsachse. Die Störung solcher Feldlinien wirkt sich negativ auf die Leistungsdaten des Messaufnehmers und somit, auf die Bestimmung des Wägemesswertes und schlussendlich auch auf die Geräteleistung im Allgemeinen aus.

In Figur 3A ist ein Messaufnehmer 310A mit zwei Permanentmagneten 313A, 313B gezeigt wobei der Spulenhalter 314A von oben durch den Mantel eingeführt ist. Durch die Öffnungen im Mantel sind die Feldlinien 312A im oberen Bereich gestört und damit nicht gleich ausgebildet wie diejenigen im unteren Bereich. Es stellt sich ein in der Bewegungsrichtung der Spule 311 nicht gleichmässiges magnetisches Feld ein.

Figur 3B zeigt denselben Messaufnehmer 310B wie in Figur 3A, nur ist hier der Spulenhalter 314B von der Seite durch den Mantel eingeführt. Dies bewirkt eine gleichmässige, symmetrische Ausbreitung der Feldlinien 312B. Im Bereich der Durchführung des Spulenhalters 314B treten diese Feldlinien 312B aus dem Messaufnehmer 310B heraus, wodurch das Magnetsystem anfällig auf Störfelder von ausserhalb wird. Diese Ausführung ist jedoch eher ungünstig, da die Feldlinien des magnetischen Flusses auf Höhe einer Verbindungslinie zwischen Polschuh - Spule 311 - Mantel gestört wird.

In einer weiteren hier nicht gezeigten Ausführung eines Messaufnehmers ist der Spulenhalter von der Seite im Bereich des oberen Permanentmagneten durch den Mantel eingeführt. Dadurch erfolgt die Auslenkungsbewegung der Spule parallel zu den magnetischen Feldlinien wodurch eine Störung minimal ausfällt. Die Feldlinien des oberen und des unteren Permanentmagneten sind zwar immer noch leicht unsymmetrisch, was sich aber kaum störend auswirkt.

Generell gilt jedoch, je kleiner die Öffnung der Durchführung durch den Mantel gehalten werden kann, desto besser wird im Endeffekt die Geräteleistung.

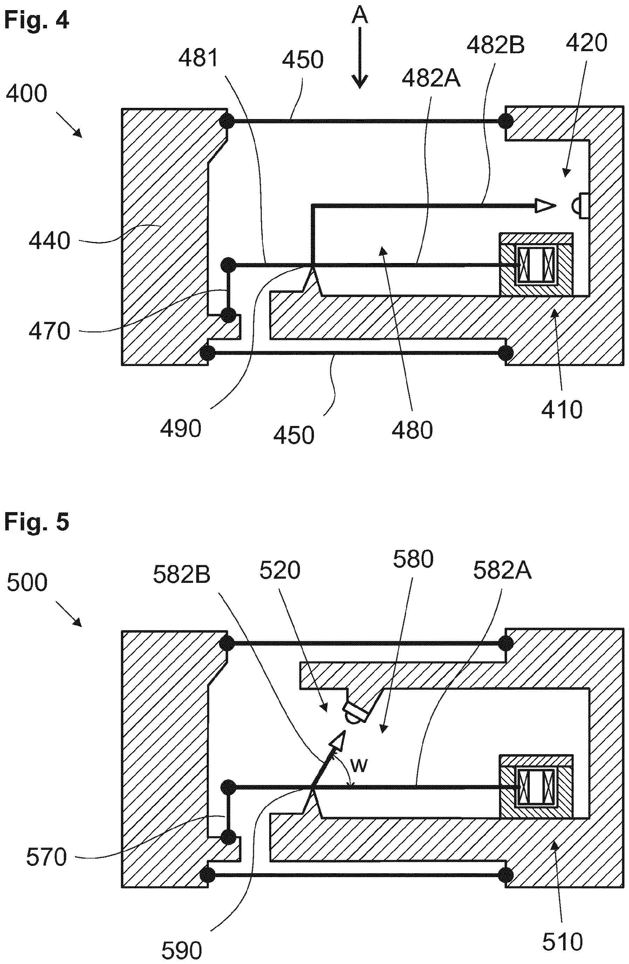

Eine erste Ausführungsform der Erfindung ist in vereinfachter Darstellung in Figur 4 gezeigt. Der Kraftübertragungshebel 480 ist an der Abstützstelle 490 drehbar gelagert und weist einen in einen ersten Teilhebelarm 482A und einen zweiten Teilhebelarm 482B geteilten zweiten Hebelarm auf, der auch Kraftarm genannt wird. Am von der Abstützstelle 490 entfernten Ende des ersten Teilhebelarms 482A ist der Messaufnehmer 410 angebracht, während am von der Abstützstelle 490 entfernten Ende des zweiten Teilhebelarms 482B der Positionssensor 420 (auch in vereinfachter Darstellung gezeigt) angebracht ist. Die beiden Teilhebelarme 482A, 482B sind in jeweils einer eigenen Ebene, welche parallel zu den Parallellenkern verläuft, übereinander angeordnet, d.h. so voneinander beabstandet, dass sie zur Ebene desselben Parallellenkers eine unterschiedliche Distanz aufweisen.

In Figur 5 ist in einer weiteren, zweiten Ausführung der zweite Teilhebelarm 582B um einen Winkel (w) zum ersten Teilhebelarm 582A um die Abstützstelle 590, oder auch Drehlager genannt, gedreht. Möglich wäre hier auch ein Winkel von 180°, d.h. dass sich der erste Teilhebelarm 582A und der zweite Teilhebelarm 582B in entgegengesetzte Richtungen erstrecken.

Am vom Drehlager 590 des schwenkbar gelagerten Kraftübertragungshebels 580 entfernten Ende des zweiten Teilhebelarms 582B ist eine Blendenfahne (vereinfacht dargestellt durch den Pfeilkopf) angeordnet, die eine Blendenöffnung, insbesondere einen Blendenschlitz oder ein Langloch, mit einer kürzesten Weite aufweist. Das von der Lichtquelle ausgesendete Licht wird durch die Blendenfahne so geschnitten, dass ein Teil des Lichts, welcher durch die kürzeste Weite strahlt auf den Lichtempfänger trifft. Damit die Blendenfahne bei einem gedreht angeordneten zweiten Teilhebelarm 582B das Licht optimal schneidet ist die Verbindungslinie zwischen dem Drehlager 590 des Kraftübertragungshebels 580 und dem Mittelpunkt der kürzesten Weite im Wesentlichen senkrecht zur kürzesten Weite. Anders ausgedrückt ist die kürzeste Weite der Blendenöffnung immer gleichgerichtet wie die Tangente eines Kreises, der das Drehlager 590 als Mittelpunkt und dabei den Mittelpunkt der kürzesten Weite auf dessen Umfang hat.

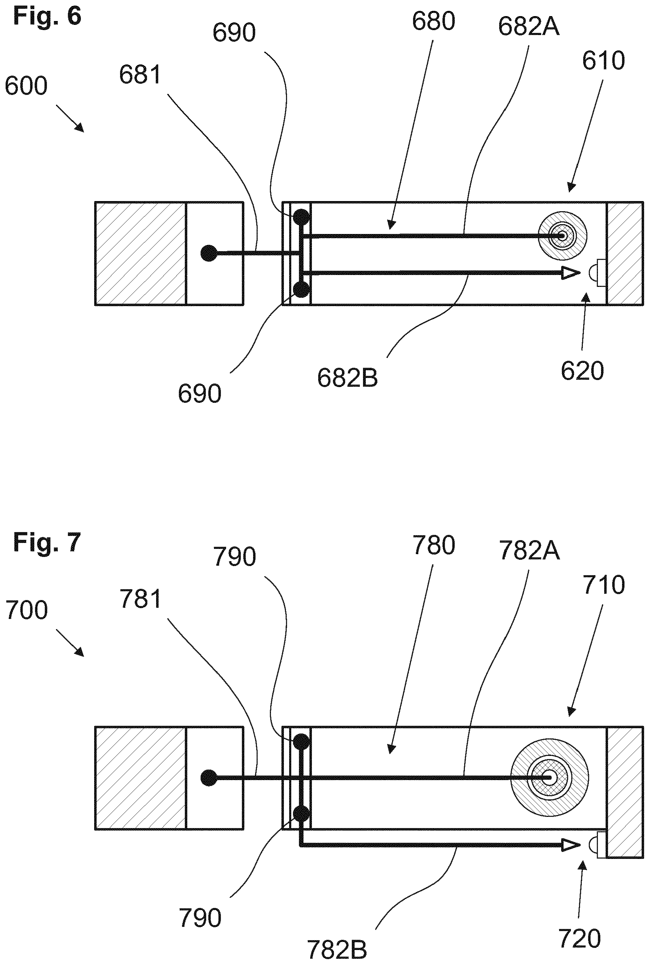

Die Figur 6 und die Figur 7 zeigen jeweils eine Kraftübertragungsvorrichtung 600, 700 aus der Blickrichtung A wie sie in Figur 4 gezeigt ist. Im Unterschied zu der Kraftübertragungsvorrichtung 400 aus Figur 4 sind bei der Kraftübertragungsvorrichtung 600 in Figur 6 der erste Teilhebelarm 682A und der zweite Teilhebelarm 682B in derselben Ebene, welche parallel zu den Parallellenkern verläuft, nebeneinander angeordnet, d.h. so voneinander beabstandet sind, dass sie zur Ebene des selben Parallellenkers die gleiche Distanz aufweisen.

Weiter ist in Figur 7 gezeigt, dass der zweite Teilhebelarm 782B auch ausserhalb des eigentlichen Grundkörpers der Kraftübertragungsvorrichtung 700 geführt werden kann. Dies zum Beispiel als angebaute Verlängerung. Die angebaute Verlängerung kann jedoch auch für den Messaufnehmer zur Anwendung kommen.

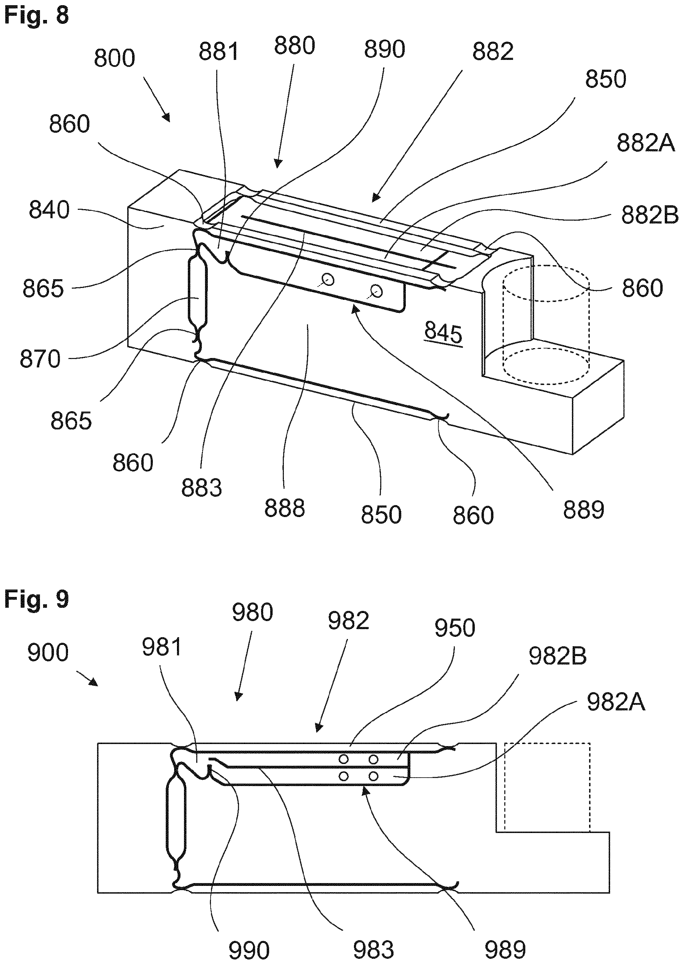

Die Kraftübertragungsvorrichtung 800 ist in Figur 8 als monolithisch, d.h. aus einem Materialblock bestehend, aufgebaut gezeigt. Die Gewichtskraft des Wägegutes (nicht gezeigt) überträgt sich auf das Gehänge, oder auch beweglicher Parallelschenkel 840 genannt. Dieser wird von Parallellenkern 850 geführt, welche über elastische Biegegelenke 860 verbunden sind. Die Koppel 870, ebenfalls mit elastischen Biegeelementen 865 ausgeführt, überträgt die Gewichtskraft auf den Lastarm 881 des Hebels 880, der im Drehpunkt durch mindestens ein Biegegelenk 890 gestützt wird. Am anderen Ende des Hebels 880, dem Kraftarm 882 wird die Kompensationsspule des elektrodynamischen Wandlers, oder auch Messaufnehmer genannt, die sich im magnetischen Fluss des Magnetsystems befindet, welches von einem Permanentmagneten erzeugt wird, angeordnet. In Figur 8 ist für den Messaufnehmer ein Platzhalter als gestrichelter Zylinder gezeigt.

Ein Trennschnitt 883 trennt den zweiten Hebelarm 882 in einer parallel zur Seitenfläche 888 verlaufenden Ebene in zwei Teilhebelarme 882A, 882B. Ein solcher Trennschnitt 883 kann auf zum Beispiel durch eine Einfräsung hergestellt werden, wenn dieser nicht durch den ganzen Materialblock gehend sein soll, ansonsten kann der Trennschnitt 883 auch mittels Drahterodieren hergestellt werden.

Auf der Seitenfläche 888 des ersten Teilhebelarms 882A sind zwei Löcher gezeigt, welche als Befestigungsvorrichtungen 889 für eine Verlängerung dienen. Diese Verlängerung kann die Distanz zwischen dem ersten Teilhebelarm und der Spule, welche im Permanentmagnetsystem am feststehenden Parallelschenkel festgelegt ist, überbrücken.

In Figur 9 trennt der Trennschnitt 983 den zweiten Hebelarm 982 in einer zum Parallellenker 950 parallel verlaufenden Ebene in zwei Teilhebel 982A, 982B. Ein solcher Trennschnitt 983 kann auf zum Beispiel oder mittels Drahterodieren hergestellt werden. Auch hier sind jeweils zwei Löcher (pro Teilhebelarm 982A, 982B) gezeigt, welche als Befestigungsvorrichtungen 989 für eine Verlängerung dienen.

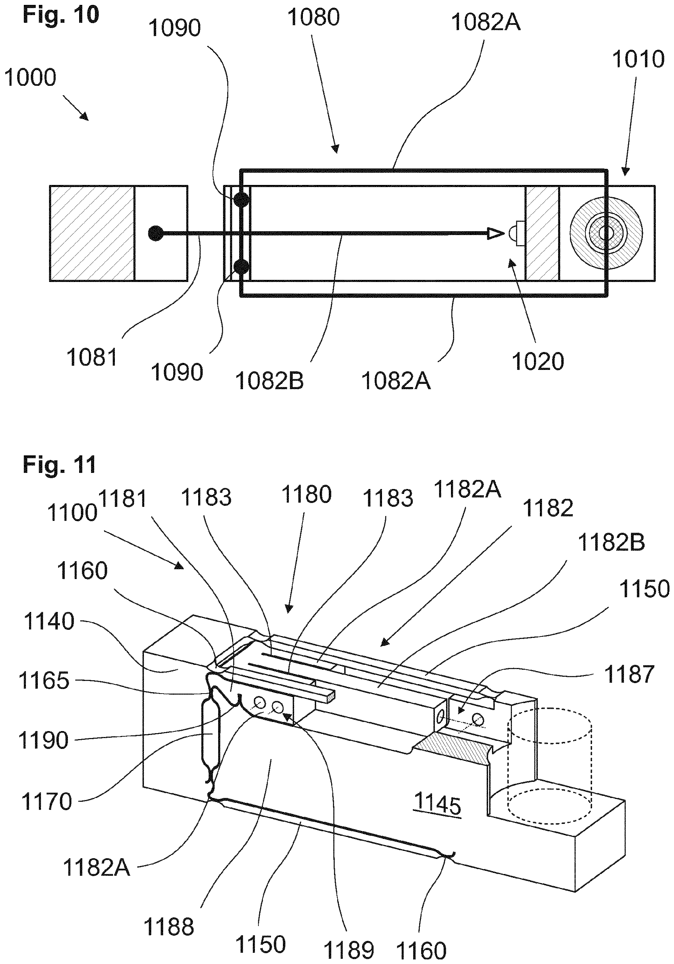

Ein drittes Ausführungsbeispiel ist in den Figur 10 und Figur 11 gezeigt. Diese Kraftübertragungsvorrichtung 1000 ist aus der Blickrichtung A wie sie in Figur 4 gezeigt ist abgebildet. Im Unterschied zu den Kraftübertragungsvorrichtungen aus Figur 6 und Figur 7 ist bei der Kraftübertragungsvorrichtung 1000 der erste Teilhebelarm 1082A geteilt und ausserhalb des eigentlichen Grundkörpers der Kraftübertragungsvorrichtung 1000 zum Messaufnehmer 1010 geführt. Der zweite Teilhebelarm 1082B liegt zwischen dem geteilten Teilhebelarm 1082A und ist zusammen mit dem geteilten Teilhebelarm 1082A in derselben Ebene, welche parallel zu den Parallellenkern 1150 verläuft, nebeneinander angeordnet, d.h. so voneinander beabstandet, dass sie zur Ebene desselben Parallellenkers 1150 die gleiche Distanz aufweisen.

In Figur 11 ist die oben zu Figur 10 beschriebene Kraftübertragungsvorrichtung 1000 monolithisch, d.h. aus einem Materialblock bestehend, aufgebaut als Kraftübertragungsvorrichtung 1100 gezeigt. Diese entspricht in ihrer Funktion derjenigen Kraftübertragungsvorrichtung wie sie zu Figur 8 beschrieben wird, wobei auch hier für den Messaufnehmer ein Platzhalter als gestrichelter Zylinder eingesetzt ist. Anders als bei der Kraftübertragungsvorrichtung 800 aus Figur 8 besitzt die Kraftübertragungsvorrichtung 1100 zwei Trennschnitte 1183. Es entstehen so drei Teilhebelarme, wobei die beiden aussenliegenden Teilhebelarme 1182A durch jeweils eine Verlängerung, welche an den Befestigungsvorrichtungen 1189 angebracht werden, mit dem Messaufnehmer verbindbar sind. So kann der erste Teilhebelarm als geteilter erster Teilhebelarm angesehen werden. Durch den ausgeschnittenen Bereich wird die Sicht auf den zweiten Teilhebelarm 1182B frei. Dieser weist an seinem dem Biegegelenk 1190 entfernten Ende eine Befestigungsvorrichtung für eine die Bewegung der Spule mitmachende Blendenfahne auf, welche dann in der Art einer Lichtschranke den freien Bereich zwischen dem Lichtsender und Lichtempfänger eines Positionssensors durchsetzt. Die Befestigungsanordnung 1187 für den eben genannten Positionssensor und die Blendenfahne ist in Figur 11 als eine Bohrung angedeutet. Um die Fertigung einer Kraftübertragungsvorrichtung 1100 zu vereinfachen, können die Trennschnitte 1183 weglassen werden. Der zweite Teilhebelarm 1182B wird durch eine (beid-)seitige Einfräsung definiert, welche so den ersten Teilhebelarm 1182A vom zweiten Teilhebelarm 1182B absetzt, bzw. trennt. Wie oben schon beschrieben kann dann der erste Teilhebelarm 1182A mittels einer Verlängerung ausserhalb des eigentlichen Grundkörpers der Kraftübertragungsvorrichtung 1100 zum Messaufnehmer geführt werden. Durch das Wegfallen der Trennschnitte 1183 wird der obere Parallellenker nicht geschwächt oder allenfalls geteilt.

### Liste der Bezugszeichen

- 10: Kraftübertragungsvorrichtung nach Stand der Technik
- 200, 400, 500, 600 700, 800, 900, 1000: Kraftübertragungsvorrichtung
- 110, 310A, 310B, 410 510, 610, 710, 1010: Messaufnehmer
- 111, 311: Kompensationsspule
- 112, 312A, 312B: Magnetischer Fluss, Feldlinien
- 113, 313A, 313B: Permanentmagnet -system
- 114, 314A, 314B: Spulenhalter
- 115, 315: Luftspalt
- 120, 420, 520 620, 720, 1020: Positionssensor
- 121: Blendenfahne
- 130: Waagschale
- 140, 440, 840, 1140: Beweglicher Parallelschenkel
- 145, 845, 1145: Feststehender Parallelschenkel
- 150, 450, 850, 950, 1150: Parallellenker
- 160, 860, 1160: Biegelager am Parallellenker
- 165, 865, 1165: Biegelager an der Koppel
- 170, 470, 570, 870, 1170: Koppelglied
- 180, 280, 480, 580, 680, 780, 880, 980, 1080, 1180: Kraftübertragungshebel
- 181, 281, 481, 581, 681, 781, 881, 981, 1081, 1181: Lastarm, erster Hebelarm
- 182, 282, 482, 582, 682, 782, 882, 982, 1082, 1182: Kraftarm, zweiter Hebelarm
- 282A, 482A, 582A, 682A,782A, 882A 982A, 1082A, 1182A: Erster Teilhebelarm
- 282B, 482B, 582B 682B,782B, 882B 982B, 1082B, 1182B: Zweiter Teilhebelarm
- 883, 983, 1183: Trennschnitt
- 1187: Befestigungsanordnung für Positionssensor und Blendenfahne
- 888, 1088: Seitenfläche
- 889, 989, 1189: Befestigungsvorrichtung für Hebelverlängerung
- 190, 490, 590, 690, 790, 890, 990, 1090, 1190: Abstützstelle, Drehlager des Übertragungshebels

## Patentansprüche

1. Kraftübertragungsvorrichtung (200, 400, 500, 600, 700, 800, 900, 1000, 1100) für eine Kraftmessvorrichtung basierend auf dem Prinzip der elektromagnetischen Kraftkompensation, aufweisend
eine Parallelführung mit
einem beweglichen Parallelschenkel (140, 440, 840, 1140),
einem feststehenden Parallelschenkel (145, 845, 1145), und
mindestens zwei Parallellenkern (150, 450, 850, 950, 1150),
wobei die Parallelschenkel (140, 145, 440, 840, 845, 1140, 1145) und die Parallellenker (150, 450, 850, 950, 1150) durch Biegelager (160, 860, 1160) miteinander verbunden sind und der bewegliche Parallelschenkel (140, 440, 840, 1140) durch die Parallellenker (150, 450, 850, 950, 1150) am feststehenden Parallelschenkel (145, 845, 1145) geführt ist, ferner aufweisend einen um ein am feststehenden Parallelschenkel (140, 145, 440, 840, 845, 1140, 1145) angeordnetes Drehlager (190, 490, 590, 690, 790, 890, 990, 1090, 1190) schwenkbar gelagerten Kraftübertragungshebel (280, 480, 580, 680, 780, 880, 980, 1080, 1180) mit
einem über ein Koppelglied (470, 570, 870, 1170) mit dem beweglichen Parallelschenkel (140, 440, 840, 1140) in kraftübertragenderweise verbundenen ersten Hebelarm (181, 281, 481, 581, 681, 781, 881, 981, 1081, 1181), und
einem mit einem Messaufnehmer (110, 310A, 310B, 410, 510, 610, 710, 1010) in kraftübertragenderweise verbindbaren zweiten Hebelarm (182, 282, 482, 582, 682, 782, 882, 982, 1082, 1182), welcher einen ersten Teilhebelarm (282A, 482A, 582A, 682A, 782A, 882A, 982A, 1082A, 1182A) und einen zweiten Teilhebelarm (282B, 482B, 582B, 682B,782B, 882B, 982B, 1082B, 1182B) aufweist, wobei
der erste Teilhebelarm (282A, 482A, 582A, 682A, 782A, 882A, 982A, 1082A, 1182A) dafür ausgelegt ist, die vom Messaufnehmer (110, 310A, 310B, 410, 510, 610, 710, 1010) erzeugte Kompensationskraft aufzunehmen,
der zweite Teilhebelarm (282B, 482B, 582B, 682B,782B, 882B, 982B, 1082B, 1182B) dafür ausgelegt ist, eine Auslenkung des schwenkbar gelagerten Kraftübertragungshebels (280, 480, 580, 680, 780, 880, 980, 1080, 1180) von einem Positionssensor (120, 420, 520, 620, 720, 1020) zu erfassen,
**dadurch gekennzeichnet, dass**
der erste Teilhebelarm (282A, 482A, 582A, 682A, 782A, 882A, 982A, 1082A, 1182A) und der zweite Teilhebelarm (282B, 482B, 582B, 682B,782B, 882B, 982B, 1082B, 1182B) über deren Länge bis nahe dem Drehlager (190, 490, 590, 690, 790, 890, 990, 1090, 1190) des schwenkbar gelagerten Kraftübertragungshebel (280, 480, 580, 680, 780, 880, 980, 1080, 1180) derart voneinander getrennt sind, so dass eine vom Messaufnehmer (110, 310A, 310B, 410, 510, 610, 710, 1010) erzeugte Kompensationskraft im Wesentlichen über den ersten Teilhebelarm (282A, 482A, 582A, 682A, 782A, 882A, 982A, 1082A, 1182A) an den beweglichen Parallelschenkel (140, 440, 840, 1140) übertragen wird.

2. Kraftübertragungsvorrichtung nach Anspruch 1, **dadurch gekennzeichnet, dass** der erste Teilhebelarm (282A, 482A, 582A, 682A, 782A, 882A, 982A, 1082A, 1182A) und der zweite Teilhebelarm (282B, 482B, 582B, 682B,782B, 882B, 982B, 1082B, 1182B) über deren Länge und über das Drehlager (190, 490, 590, 690, 790, 890, 990, 1190) des schwenkbar gelagerten Kraftübertragungshebel (280, 480, 580, 680, 780, 880, 980, 1080, 1180) hinaus voneinander getrennt sind.

3. Kraftübertragungsvorrichtung nach einem der Ansprüche 1 oder 2, **dadurch gekennzeichnet, dass** der zweite Hebelarm (1182) einen geteilten ersten Teilhebelarm (1182A) aufweist, der derart ausgelegt ist, so dass die erzeugte Kompensationskraft im Wesentlichen gleichmässig verteilt über den geteilten ersten Teilhebelarm (1182A) an den beweglichen Parallelschenkel (140, 440, 840, 1140) übertragen wird.

4. Kraftübertragungsvorrichtung nach Anspruch 3, **dadurch gekennzeichnet, dass** der zweite Teilhebelarm (1182B) zwischen dem geteilten ersten Teilhebelarm (1182A) angeordnet ist.

5. Kraftübertragungsvorrichtung nach einem der Ansprüche 1 bis 4, **dadurch gekennzeichnet, dass** der erste Teilhebelarm (282A, 482A, 582A, 682A, 782A, 882A, 982A, 1082A, 1182A) und der zweite Teilhebelarm (282B, 482B, 582B, 682B,782B, 882B, 982B, 1082B, 1182B) derart voneinander getrennt sind, dass die beiden Teilhebelarme in jeweils einer eigenen Ebene, welche parallel zu den Parallellenkern (150, 450, 850, 950, 1150) verläuft, übereinander angeordnet sind.

6. Kraftübertragungsvorrichtung nach einem der Ansprüche 1 bis 4, **dadurch gekennzeichnet, dass** der erste Teilhebelarm (282A, 482A, 582A, 682A, 782A, 882A, 982A, 1082A, 1182A) und der zweite Teilhebelarm (282B, 482B, 582B, 682B,782B, 882B, 982B, 1082B, 1182B) derart voneinander getrennt sind, dass die beiden Teilhebelarme in derselben Ebene, welche parallel zu den Parallellenkern (150, 450, 850, 950, 1150) verläuft, nebeneinander angeordnet sind.

7. Kraftübertragungsvorrichtung nach Anspruch 1 bis 6, **dadurch gekennzeichnet, dass** der zweite Teilhebelarm (282B, 482B, 582B, 682B,782B, 882B, 982B, 1082B, 1182B) in einem Winkel (w) zum ersten Teilhebelarm (282A, 482A, 582A, 682A, 782A, 882A, 982A, 1082A, 1182A) um das Drehlager (190, 490, 590, 690, 790, 890, 990, 1090, 1190) gedreht angeordnet ist.

8. Kraftübertragungsvorrichtung nach einem der Ansprüche 1 bis 7, **dadurch gekennzeichnet, dass** am vom Drehlager (190, 490, 590, 690, 790, 890, 990, 1090, 1190) des schwenkbar gelagerten Kraftübertragungshebel (280, 480, 580, 680, 780, 880, 980, 1080, 1180) entfernten Ende des zweiten Teilhebelarms (282B, 482B, 582B, 682B,782B, 882B, 982B, 1082B, 1182B) eine Blendenfahne (121) angeordnet ist.

9. Kraftübertragungsvorrichtung nach Anspruch 8, **dadurch gekennzeichnet, dass** die Blendenfahne (121) eine Blendenöffnung, insbesondere einen Blendenschlitz oder ein Langloch, mit einer kürzesten Weite aufweist.

10. Kraftübertragungsvorrichtung nach Anspruch 9, **dadurch gekennzeichnet, dass** eine Verbindungslinie zwischen dem Drehlager (190, 490, 590, 690, 790, 890, 990, 1090, 1190) des Kraftübertragungshebels (280, 480, 580, 680, 780, 880, 980, 1080, 1180) und dem Mittelpunkt der kürzesten Weite im Wesentlichen senkrecht zur kürzesten Weite ist.

11. Kraftübertragungsvorrichtung nach einem der Ansprüche 1 bis 10, **dadurch gekennzeichnet, dass** der feststehende Parallelschenkel (145, 845, 1145), der bewegliche Parallelschenkel (140, 440, 840, 1140) und der Kraftübertragungshebel (280, 480, 580, 680, 780, 880, 980, 1080, 1180) zusammen aus einem monolithischen, homogenen Materialblock gearbeitet sind in welchem Biegelager (160, 860, 1160) in der Form von dünnen Materialbrücken ausgebildet sind.

12. Kraftübertragungsvorrichtung nach Anspruche 11, **dadurch gekennzeichnet, dass** der erste Teilhebelarm (282A, 482A, 582A, 682A, 782A, 882A, 982A, 1082A, 1182A) und/oder der zweite Teilhebelarm (282B, 482B, 582B, 682B,782B, 882B, 982B, 1082B, 1182B) derart ausgestaltet sind, dass mindestens einer der beiden Teilhebelarme ausserhalb des monolithischen, homogenen Materialblock verlängerbar ist.

13. Kraftmessvorrichtung basierend auf dem Prinzip der elektromagnetischen Kraftkompensation, mit
einer Kraftübertragungsvorrichtung (200, 400, 500, 600, 700, 800, 900, 1000, 1100) nach einem der vorangehenden Ansprüche,
einem zwischen dem ersten Teilhebelarm (282A, 482A, 582A, 682A, 782A, 882A, 982A, 1082A, 1182A) und dem feststehenden Parallelschenkel (145, 845, 1145) angeordneten Messaufnehmer (110, 310A, 310B, 410, 510, 610, 710, 1010) zur Aufnahme der Gewichtskraft einer zu wägenden Last, aufweisend
ein am feststehenden Parallelschenkel (145, 845, 1145) oder am ersten Teilhebelarm (282A, 482A, 582A, 682A, 782A, 882A, 982A, 1082A, 1182A) angeordnetes Permanentmagnetsystem (113, 313A, 313B) mit einem Luftspalt (115, 315), und
eine entsprechend dem Permanentmagnetsystem (113, 313A, 313B) am ersten Teilhebelarm (282A, 482A, 582A, 682A, 782A, 882A, 982A, 1082A, 1182A) oder am feststehenden Parallelschenkel (145, 845, 1145) angebrachten und im Luftspalt (115, 315) des Permanentmagnetsystem (113, 313A, 313B) bewegliche Spule (111, 311), welche im Messbetrieb von einem Kompensationsstrom durchflossenen wird,
ferner mit einem optoelektronischen Positionssensor (120, 420, 520, 620, 720, 1020), aufweisend
eine Lichtquelle und
einen Lichtempfänger,
wobei die Lichtquelle und der Lichtempfänger auf dem feststehenden Parallelschenkel (145, 845, 1145) mit Zwischenraum angeordnet sind,
sowie eine die Bewegung der Spule (111, 311) mitmachende am zweiten Teilhebelarm (282B, 482B, 582B, 682B, 782B, 882B, 982B, 1082B, 1182B) angeordnete Blendenfahne (121) welche in der Art einer Lichtschranke den freien Bereich zwischen dem Lichtsender und Lichtempfänger durchsetzt.

14. Gravimetrisches Messinstrument mit einer Kraftmessvorrichtung nach Anspruch 13.

## Claims

1. A force transmission device (200, 400, 500, 600, 700, 800, 900, 1000, 1100) for a load cell based on the principle of electromagnetic force compensation, comprising a parallel guide with
a movable parallel leg (140, 440, 840, 1140),
a stationary parallel leg (145, 845, 1145), and
at least two parallel guide rods (150, 450, 850, 950, 1150),
wherein the parallel legs (140, 145, 440, 840, 845, 1140, 1145) and the parallel guide rods (150, 450, 850, 950, 1150) are connected to each other via flexures (160, 860, 1160) and the movable parallel leg (140, 440, 840, 1140) is guided by the parallel guide rods (150, 450, 850, 950, 1150) on the stationary parallel leg (145, 845, 1145),
further comprising a force transmission lever (280, 480, 580, 680, 780, 880, 980, 1080, 1180) pivotably mounted about a pivot bearing (190, 490, 590, 690, 790, 890, 990, 1090, 1190) arranged on the stationary parallel leg (140, 145, 440, 840, 845, 1140, 1145) with
a first lever arm (181, 281, 481, 581, 681, 781, 881, 981, 1081, 1181) connected in a force-transmitting manner via a coupling element (470, 570, 870, 1170) to the movable parallel leg (140, 440, 840, 1140), and
a second lever arm (182, 282, 482, 582, 682, 721, 882, 982, 1082, 1182) connectable in a force-transmitting manner to a measuring sensor (110, 310A, 310B, 410, 510, 610, 710, 1010), said second lever arm comprising a first part lever arm (282A, 482A, 582A, 682A, 782A, 882A, 982A, 1082A, 1182A) and a second part lever arm (282B, 482B, 582B, 682B, 782B, 882B, 982B, 1082B, 1182B), wherein
the first part lever arm (282A, 482A, 582A, 682A, 782A, 882A, 982A, 1082A, 1182A) is designed to absorb the compensation force generated by the measuring sensor (110, 310A, 310B, 410, 510, 610, 710, 1010),
the second part lever arm (282B, 482B, 582B, 682B, 782B, 882B, 982B, 1082B, 1182B) is designed to detect a deflection of the pivotably mounted force transmission lever (280, 480, 580, 680, 780, 880, 980, 1080, 1180) from a position sensor (120, 320, 520, 620, 720, 1020),
**characterised in that**
the first part lever arm (282A, 482A, 582A, 682A, 782A, 882A, 982A, 1082A, 1182A) and the second part lever arm (282B, 482B, 582B, 682B, 782B, 882B, 982B, 1082B, 1182B) are separated from each other over their length up to close to the pivot bearing (190, 490, 590, 690, 790, 890, 990, 1090, 1190) of the pivotably mounted force transmission lever (280, 480, 580, 680, 780, 880, 980, 1080, 1180) such that a compensation force generated by the measuring sensor (110, 310A, 310B, 410, 510, 610, 710, 1010) is essentially transmitted via the first part lever arm (282A, 482A, 582A, 682A, 782A, 882A, 982A, 1082A, 1182A) to the movable parallel leg (140, 440, 840, 1140).

2. The force transmission device according to claim 1, **characterised in that** the first part lever arm (282A, 482A, 582A, 682A, 782A, 882A, 982A, 1082A, 1182A) and the second part lever arm (282B, 482B, 582B, 682B, 782B, 882B, 982B, 1082B, 1182B) are separated from each other over their length and beyond the pivot bearing (190, 490, 590, 690, 790, 890, 990, 1090, 1190) of the pivotably mounted force transmission lever (280, 480, 580, 680, 780, 880, 980, 1080, 1180).

3. The force transmission device according to one of claim 1 or 2, **characterised in that** the second lever arm (1182) comprises a divided first part lever arm (1182A), which is designed such that the generated compensation force is transmitted to the movable parallel leg (140, 440, 840, 1140), essentially evenly distributed across the divided first part lever arm (1182A).

4. The force transmission device according to claim 3, **characterised in that** the second part lever arm (1182B) is arranged between the divided first part lever arm (1182A).

5. The force transmission device according to one of claims 1 to 4, **characterised in that** the first part lever arm (282A, 482A, 582A, 682A, 782A, 882A, 982A, 1082A, 1182A) and the second part lever arm (282B, 482B, 582B, 682B, 782B, 882B, 982B, 1082B, 1182B) are separated from each other such that the two part lever arms are arranged one above the other in respectively their own plane, which extends parallel to the parallel guide rods (150, 450, 850, 950, 1150).

6. The force transmission device according to one of claims 1 to 4, **characterised in that** the first part lever arm (282A, 482A, 582A, 682A, 782A, 882A, 982A, 1082A, 1182A) and the second part lever arm (282B, 482B, 582B, 682B, 782B, 882B, 982B, 1082B, 1182B) are separated from each other such that the two part lever arms are arranged next to each other in the same plane, which extends parallel to the parallel guide rods (150, 450, 850, 950, 1150).

7. The force transmission device according to one of claims 1 to 6, **characterised in that** the second part lever arm (282B, 482B, 582B, 682B, 782B, 882B, 982B, 1082B, 1182B) is arranged rotated about the pivot bearing (190, 490, 590, 690, 790, 890, 990, 1090, 1190) at an angle (w) to the first part lever arm (282A, 482A, 582A, 682A, 782A, 882A, 982A, 1082A, 1182A).

8. The force transmission device according to one of claims 1 to 7, **characterised in that** an aperture lug (121) is arranged at the end of the second part lever arm (282B, 482B, 582B, 682B, 782B, 882B, 982B, 1082B, 1182B) which is remote from the pivot bearing (190, 490, 590, 690, 790, 890, 990, 1090, 1190) of the pivotably mounted force transmission lever (280, 480, 580, 680, 780, 880, 980, 1080, 1180).

9. The force transmission device according to claim 8, **characterised in that** the aperture lug (121) comprises an aperture opening, in particular an aperture slot or an elongated hole, with a shortest possible width.

10. The force transmission device according to claim 9, **characterised in that** a connecting line between the pivot bearing (190, 490, 590, 690, 790, 890, 990, 1090, 1190) of the force transmission lever (280, 480, 580, 680, 780, 880, 980, 1080, 1180) and the centre point of the shortest possible width is essentially vertical to the shortest possible width.

11. The force transmission device according to one of claims 1 to 10, **characterised in that** the stationary parallel leg (145, 845, 1145), the movable parallel leg (140, 440, 840, 1140) and the force transmission lever (280, 480, 580, 680, 780, 880, 980, 1080, 1180) together are formed from a monolithic homogenous material block in which flexures (160, 860, 1160) are formed shaped as thin material bridges.

12. The force transmission device according to claim 11, **characterised in that** the first part lever arm (282A, 482A, 582A, 682A, 782A, 882A, 982A, 1082A, 1182A) and/or the second part lever arm (282B, 482B, 582B, 682B, 782B, 882B, 982B, 1082B, 1182B) are designed such that at least one of the two part lever arms is extendable outside the monolithic homogenous material block.

13. A load cell based on the principle of electromagnetic force compensation, with
a force transmission device (200, 400, 500, 600, 700, 800, 900, 1000, 1100) according to one of the preceding claims,
a measuring sensor (110, 310A, 310B, 410, 510, 610, 710, 1010) arranged between the first part lever arm (282A, 482A, 582A, 682A, 782A, 882A, 982A, 1082A, 1182A) and the stationary parallel leg (145, 845, 1145) for absorbing the weight force of the load to be weighed, comprising
a permanent magnet system (113, 313A, 313B) arranged on the stationary parallel leg (145, 845, 1145) or on the first part lever arm (282A, 482A, 582A, 682A, 782A, 882A, 982A, 1082A, 1182A) with an air gap (115, 315), and
a coil (111, 311) attached corresponding to the permanent magnet system (113, 313A, 313B) to the first part lever arm (282A, 482A, 582A, 682A, 782A, 882A, 982A, 1082A, 1182A) or to the stationary parallel leg (145, 845, 1145) and movable in the air gap (115, 315) of the permanent magnet system (113, 313A, 313B), said coil having a compensation current flowing through it in measuring mode,
further with an optoelectronic position sensor (120, 420, 520, 620, 720, 1020) comprising
a light source and
a light receiver,
wherein the light source and the light receiver are arranged on the stationary parallel leg (145, 845, 1145) at a distance from each other,
as well as an aperture lug (121) participating in the movement of the coil (111, 311) and arranged on the second part lever arm (282B, 482B, 582B, 682B, 782B, 882B, 982B, 1082B, 1182B), said coil extending in the manner of a light barrier in the free area between the light transmitter and the light receiver.

14. A gravimetric measuring instrument with a load cell according to 13.

## Revendications

1. Dispositif de transmission de force (200, 400, 500, 600, 700, 800, 900, 1000, 1100) pour un dispositif de mesure de force basé sur le principe de la compensation de force électromagnétique, comprenant
un guidage parallèle avec
une branche parallèle mobile (140, 440, 840, 1140),
une branche parallèle fixe (145, 845, 1145), et
au moins deux bielles parallèles (150, 450, 850, 950, 1150),
dans lequel les deux branches parallèles (140, 145, 440, 840, 845, 1140, 1145) et les bielles parallèles (150, 450, 850, 950, 1150) sont reliées entre elles par des paliers à flexion (160, 860, 1160), et la branche parallèle mobile (140, 440, 840, 1140) est guidée sur la branche parallèle fixe (145, 845, 1145) par les bielles parallèles (150, 450, 850, 950, 1150), présentant en outre un levier de transmission de force (280, 480, 580, 680, 780, 880, 980, 1080, 1180) monté de façon pivotante autour d'un palier rotatif (190, 490, 690, 790, 890, 990, 1090, 1190) disposé sur la branche parallèle fixe (140, 145, 440, 840, 845, 1140, 1145), avec
un premier bras de levier (181, 281, 481, 581, 681, 781, 881, 981, 1081, 1181) relié à la branche parallèle mobile (140, 440, 840, 1140) par le biais d'un élément d'accouplement (470, 570, 870, 1170), de manière à transmettre de la force, et
un deuxième bras de levier (182, 282, 482, 582, 682, 782, 882, 982, 1082, 1182) apte à être relié à un capteur de mesure (110, 310A, 310B, 410, 510, 610, 710, 1010) de manière à transmettre de la force, lequel présente un premier bras de levier partiel (282A, 482A, 582A, 682A, 782A, 882A, 982A, 1082A, 1182A) et un deuxième bras de levier partiel (282B, 482B, 582B, 682B, 782B, 882B, 982B, 1082B, 1182B), dans lequel
le premier bras de levier partiel (282A, 482A, 582A, 682A, 782A, 882A, 982A, 1082A, 1182A) est conçu pour recevoir la force de compensation générée par le capteur de mesure (110, 310A, 310B, 410, 510, 610, 710, 1010),
le deuxième bras de levier partiel (282B, 482B, 582B, 682B, 782B, 882B, 982B, 1082B, 1182B) est conçu pour détecter une déviation du levier de transmission de force (280, 480, 580, 680, 780, 880, 980, 1080, 1180) monté de façon pivotante à partir d'un capteur de position (120, 420, 520, 620, 720, 1020),
**caractérisé en ce que**
le premier bras de levier partiel (282A, 482A, 582A, 682A, 782A, 882A, 982A, 1082A, 1182A) et le deuxième bras de levier partiel (282B, 482B, 582B, 682B, 782B, 882B, 982B, 1082B, 1182B) sont séparés l'un de l'autre de telle façon sur leur longueur jusqu'à proximité du palier rotatif (190, 490, 690, 790, 890, 990, 1090, 1190) du levier de transmission de force (280, 480, 580, 680, 780, 880, 980, 1080, 1180) monté de façon pivotante, qu'une force de compensation générée par le capteur de mesure (110, 310A, 310B, 410, 510, 610, 710, 1010) est transmise essentiellement par le premier bras de levier partiel (282A, 482A, 582A, 682A, 782A, 882A, 982A, 1082A, 1182A) à la branche parallèle mobile (140, 440, 840, 1140).

2. Dispositif de transmission de force selon la revendication 1, **caractérisé en ce que** le premier bras de levier partiel (282A, 482A, 582A, 682A, 782A, 882A, 982A, 1082A, 1182A) et le deuxième bras de levier partiel (282B, 482B, 582B, 682B, 782B, 882B, 982B, 1082B, 1182B) sont séparés l'un de l'autre sur leur longueur et au-delà du palier rotatif (190, 490, 690, 790, 890, 990, 1090, 1190) du levier de transmission de force (280, 480, 580, 680, 780, 880, 980, 1080, 1180) monté de façon pivotante.

3. Dispositif de transmission de force selon l'une des revendications 1 ou 2, **caractérisé en ce que** le deuxième bras de levier (1182) présente un premier bras de levier partiel divisé (1182A), lequel est conçu de telle façon que la force de compensation générée est transmise par le premier bras de levier partiel divisé (1182A) à la branche parallèle mobile (140, 440, 840, 1140) en étant essentiellement répartie de façon homogène.

4. Dispositif de transmission de force selon la revendication 3, **caractérisé en ce que** le deuxième bras de levier partiel (1182B) est disposé entre le premier bras de levier partiel divisé (1182A).

5. Dispositif de transmission de force selon l'une des revendications 1 à 4, **caractérisé en ce que** le premier bras de levier partiel (282A, 482A, 582A, 682A, 782A, 882A, 982A, 1082A, 1182A) et le deuxième bras de levier partiel (282B, 482B, 582B, 682B, 782B, 882B, 982B, 1082B, 1182B) sont séparés de telle façon l'un de l'autre, que les deux bras de levier partiels sont disposés l'un au-dessus de l'autre respectivement dans un plan propre s'étendant parallèlement aux bielles parallèles (150, 450, 850, 950, 1150).

6. Dispositif de transmission de force selon l'une des revendications 1 à 4, **caractérisé en ce que** le premier bras de levier partiel (282A, 482A, 582A, 682A, 782A, 882A, 982A, 1082A, 1182A) et le deuxième bras de levier partiel (282B, 482B, 582B, 682B, 782B, 882B, 982B, 1082B, 1182B) sont séparés de telle façon l'un de l'autre, que les deux bras de levier partiels sont disposés côte à côte dans un même plan s'étendant parallèlement aux bielles parallèles (150, 450, 850, 950, 1150).

7. Dispositif de transmission de force selon l'une des revendications 1 à 6, **caractérisé en ce que** le deuxième bras de levier partiel (282B, 482B, 582B, 682B, 782B, 882B, 982B, 1082B, 1182B) est disposé en rotation autour du palier rotatif (190, 490, 690, 790, 890, 990, 1090, 1190) en formant un angle (w) par rapport au premier bras de levier partiel (282A, 482A, 582A, 682A, 782A, 882A, 982A, 1082A, 1182A).

8. Dispositif de transmission de force selon l'une des revendications 1 à 7, **caractérisé en ce qu'un** drapeau d'obturateur (121) est disposé à l'extrémité du deuxième bras de levier partiel (282B, 482B, 582B, 682B, 782B, 882B, 982B, 1082B, 1182B) éloignée du palier rotatif (190, 490, 690, 790, 890, 990, 1090, 1190) du levier de transmission de force (280, 480, 580, 680, 780, 880, 980, 1080, 1180) monté de façon pivotante.

9. Dispositif de transmission de force selon la revendication 8, **caractérisé en ce que** le drapeau d'obturateur (121) présente une ouverture d'obturateur, en particulier une fente d'obturateur ou un trou oblong, avec une largeur la plus courte.

10. Dispositif de transmission de force selon la revendication 9, **caractérisé en ce qu'une** ligne de liaison entre le palier rotatif (190, 490, 690, 790, 890, 990, 1090, 1190) du levier de transmission de force (280, 480, 580, 680, 780, 880, 980, 1080, 1180) et le point central de la largeur la plus courte est essentiellement perpendiculairement à la largeur la plus courte.

11. Dispositif de transmission de force selon l'une des revendications 1 à 10, **caractérisé en ce que** la branche parallèle fixe (145, 845, 1145), la branche parallèle mobile (140, 440, 840, 1140) et le levier de transmission de force (280, 480, 580, 680, 780, 880, 980, 1080, 1180) sont réalisés conjointement à partir d'un bloc de matériau homogène monolithique, dans lequel sont formés des paliers à flexion (160, 860, 1160) sous la forme de ponts de matériau fins.

12. Dispositif de transmission de force selon la revendication 11, **caractérisé en ce que** le premier bras de levier partiel (282A, 482A, 582A, 682A, 782A, 882A, 982A, 1082A, 1182A) et/ou le deuxième bras de levier partiel (282B, 482B, 582B, 682B, 782B, 882B, 982B, 1082B, 1182B) sont conçus de telle façon qu'au moins l'un des deux bras de levier partiels est extensible à l'extérieur du bloc de matériau homogène monolithique.

13. Dispositif de mesure de force basé sur le principe de la compensation de force électromagnétique, comprenant
un dispositif de transmission de force (200, 400, 500, 600, 700, 800, 900, 1000, 1100) selon l'une des revendications précédentes,
un capteur de mesure (110, 310A, 310B, 410, 510, 610, 710, 1010) disposé entre le premier bras de levier partiel (282A, 482A, 582A, 682A, 782A, 882A, 982A, 1082A, 1182A) et la branche parallèle fixe (145, 845, 1145) pour recevoir le poids d'une charge à peser, comportant
un système d'aimant permanent (113, 313A, 313B) avec un entrefer (115, 315), lequel est disposé sur la branche parallèle fixe (145, 845, 1145) ou sur le premier bras de levier partiel (282A, 482A, 582A, 682A, 782A, 882A, 982A, 1082A, 1182A), et
une bobine (111, 311) fixée sur le premier bras de levier partiel (282A, 482A, 582A, 682A, 782A, 882A, 982A, 1082A, 1182A) ou sur la branche parallèle fixe (145, 845, 1145) de manière à correspondre au système d'aimant permanent (113, 313A, 313B) tout en étant mobile dans l'entrefer (115, 315) du système d'aimant permanent (113, 313A, 313B), laquelle est traversée par un courant de compensation pendant la prise de mesure,
et comprenant en outre un capteur de position optoélectronique (120, 420, 520, 620, 720, 1020) comportant
une source de lumière et
un récepteur de lumière,
dans lequel la source de lumière et le récepteur de lumière sont disposés sur la branche parallèle fixe (145, 845, 1145) avec un espace intermédiaire,
ainsi qu'un drapeau d'obturateur (121) disposé sur le deuxième bras de levier partiel (282B, 482B, 582B, 682B, 782B, 882B, 982B, 1082B, 1182B) et participant au mouvement de la bobine (111, 311), lequel traverse la zone dégagée entre l'émetteur de lumière et le récepteur de lumière, à la façon d'une barrière lumineuse.

14. Instrument de mesure gravimétrique avec un dispositif de mesure de force selon la revendication 13.
